# FASCICULE DE BREVET EUROPEEN

(11) **EP 3 997 356 B1**
(45) Date de publication et mention de la délivrance du brevet: **17.12.2025**
(21) Numéro de dépôt: 20737194.9
(22) Date de dépôt: 09.07.2020
(51) Int. Cl.: F16F 9/49, F15B 15/22

(54) **BUTÉE HYDRAULIQUE POUR AMORTISSEUR**
HYDRAULISCHER ENDANSCHLAG FÜR EINEN DÄMPFER
HYDRAULIC END STOP FOR A DAMPER

(30) Priorité: 09.07.2019 FR 1907686
(43) Date de publication de la demande: 18.05.2022
(73) Titulaire: Soben, 46230 Fontanes (FR)
(72) Inventeur: TALON, Benjamin, 46000 CAHORS (FR); CHABRERIE, Yan, 46140 LUZECH (FR); MOLIÈRES, Mélina, 46250 FRAYSSINET-LE-GËLAT (FR)
(74) Mandataire: BARRE LAFORGUE
(86) Numéro de dépôt international: PCT/EP2020/069447
(87) Numéro de publication internationale: WO 2021/005180

(56) Documents cités:
- EP-A1- 1 375 957
- EP-A1- 3 406 931
- WO-A1-2017/093046
- DE-A1- 102009 057 165
- US-B1- 9 091 320

## Description

L'invention concerne une butée hydraulique permettant de freiner en fin de course, en compression ou en détente, le piston d'une machine à piston telle qu'un amortisseur. L'invention s'étend à une cartouche d'amortisseur équipée d'une telle butée hydraulique et à un amortisseur comprenant une telle cartouche.

Dans le présent texte, le terme « hydraulique » est employé dans son sens le plus large, c'est-à-dire fonctionnant avec un fluide incompressible, que ce soit de l'huile ou tout autre liquide. On comprend par « fluide incompressible » des fluides incompressibles ou quasi-incompressibles, c'est-à-dire des fluides susceptibles de contenir une émulsion d'un fluide compressible (gaz) avec un fluide incompressible et pouvant donc présenter une faible variation de volume avec la pression. La butée hydraulique selon l'invention est prévue pour équiper une machine à piston, c'est-à-dire une machine comportant au moins un tube cylindrique à l'intérieur et dans l'axe duquel se déplace un piston. La description de la butée hydraulique selon l'invention est faite en relation avec son utilisation dans un amortisseur d'un dispositif de suspension d'un véhicule automobile, et plus particulièrement un amortisseur monotube, sans que cela soit limitatif quant à son utilisation qui peut s'étendre à des amortisseurs bitubes. Les termes tels que « supérieur », « inférieur » et leurs dérivés sont utilisés par rapport à la position usuelle d'un amortisseur monté sur un véhicule automobile, c'est-à-dire sensiblement vertical. Dans le cas des amortisseurs monotubes, l'amortisseur comprend une cartouche montée avec une tige vers le bas. L'invention est aussi compatible avec les amortisseurs bitubes qui eux sont montés avec une tige vers le haut.

Les amortisseurs sont utilisés afin d'améliorer la tenue de route des véhicules. Ils permettent d'assurer un contact optimal entre la roue et le sol afin d'assurer la traction, le freinage et le guidage du véhicule. En particulier, les amortisseurs permettent de réduire les impacts sur le véhicule résultant des irrégularités de la surface sur laquelle se déplace le véhicule. Ainsi, l'amortisseur s'oppose au mouvement de la roue par rapport à la caisse du véhicule.

Néanmoins, plus la vitesse d'impact augmente, plus l'effort généré par l'amortisseur augmente. Cela entraîne des problèmes de saturation hydraulique qui génèrent une augmentation importante de l'effort généré par l'amortisseur et empêchent la roue montée sur cet amortisseur de parcourir toute sa course disponible, car elle est freinée trop vite.

Pour éviter cet inconvénient, on connaît des amortisseurs adaptés pour fonctionner selon plusieurs plages de fonctionnement hydraulique. Ces amortisseurs présentent plusieurs zones, chaque zone étant dédiée à une plage de fonctionnement donnée.

Une zone centrale est dédiée au fonctionnement normal de l'amortisseur. Dans cette zone l'amortissement est uniquement proportionnel à la vitesse d'impact. Cette zone centrale comprend un piston principal mobile axialement.

L'amortisseur comprend deux zones pourvues chacune d'une butée hydraulique. Ces zones sont disposées à chaque extrémité longitudinale de la zone centrale. Les butées hydrauliques sont des organes hydrauliques logés à l'intérieur de l'amortisseur qui sont capables de générer un accroissement d'effort proportionnel non seulement à la vitesse, mais aussi à la position relative du piston principal dans l'amortisseur.

FR 2 995 048 décrit notamment une butée hydraulique permettant de restreindre de plus en plus le débit de l'amortisseur lorsque le piston principal se rapproche de l'extrémité inférieure de l'amortisseur. Une telle butée hydraulique permet de dissiper l'énergie sous forme de chaleur et n'en restitue aucun effort contrairement aux butées caoutchoucs ou polyuréthanes. Le document EP1375957A1 divulgue une butée hydraulique ayant les caractéristiques du préambule de la revendication 1.

Le document EP3406931A1 divulgue une outre butée hydraulique connue.

Dans les amortisseurs bitubes, on peut utiliser deux types de butées hydrauliques dédiées chacune à une fin de course donnée du piston principal.

Une première butée, dite butée hydraulique de compression, est utilisée généralement sur les 20 à 50 derniers millimètres de course de compression du piston principal. Cette butée hydraulique de compression permet d'arrêter la roue assemblée à l'amortisseur sur les chocs comme par exemple les dos d'âne.

Une deuxième butée, dite butée hydraulique de détente, est utilisée généralement sur les 15 à 30 derniers millimètres de course de détente. Cette butée hydraulique de détente permet d'arrêter en douceur la roue lorsqu'elle tombe par exemple dans une cavité formée sur la surface sur laquelle se déplace le véhicule.

Ces deux types de butées hydrauliques permettent d'améliorer considérablement le confort et la sécurité des véhicules. En effet, elles dissipent beaucoup plus d'énergie qu'un amortisseur traditionnel exempt de telles butées. Ces butées permettent également de freiner la roue en douceur.

La butée hydraulique de détente peut être installée dans un amortisseur monotube à piston diviseur dans l'axe de la tige. En revanche, la butée hydraulique de compression ne peut être installée dans un tel amortisseur monotube. En effet, le piston diviseur dans le fond de l'amortisseur empêche d'installer la butée hydraulique de compression. Or, en l'absence de butée hydraulique de compression, les amortisseurs monotubes se trouvent privés des avantages qu'offre cette technologie

L'invention vise à pallier ces inconvénients.

L'invention vise donc à proposer une butée hydraulique adaptée pour être utilisée dans un amortisseur monotube.

L'invention vise également à proposer une telle butée hydraulique fonctionnant en détente, mais aussi en compression.

L'invention vise également à proposer une cartouche d'amortisseur et un amortisseur comprenant une telle butée hydraulique.

L'invention concerne donc une butée hydraulique pour le freinage en fin de course d'un piston principal monté sur une tige mobile selon un axe principal, la butée hydraulique comprenant :
- un corps, dit corps de butée, formé d'une paroi cylindrique qui délimite une cavité et présente deux extrémités longitudinales,
- deux pistons montés dans ladite cavité de façon à pouvoir coulisser dans cette dernière selon l'axe principal, les deux pistons sont adaptés à être déplacés selon l'axe principal par la tige dans le corps de butée,

un premier piston, dit piston de détente, étant adapté pour être déplacé entre :
   o une première position, dite position comprimée, entre les deux extrémités longitudinales du corps de butée, et
   o une seconde position, dite position étendue, entre une première extrémité longitudinale, dite extrémité supérieure, du corps de butée et la position comprimée du piston de détente,
un deuxième piston, dit piston de compression, qui est adapté pour être déplacé entre :
   o une première position, dite position étendue, entre la position comprimée du piston de détente et une deuxième extrémité longitudinale, dite extrémité inférieure, du corps de butée, et
   o une seconde position, dite position comprimée, entre la position étendue du piston de compression et la position comprimée du piston de détente,
ledit corps de butée comprend des moyens de communication de fluide entre, d'une part, un espace défini entre la position étendue du piston de détente et la position étendue du piston de compression, et d'autre part, l'extérieur du corps de butée

La butée hydraulique se caractérise en ce que le piston de détente présente au moins une lumière traversante adaptée pour laisser passer un fluide à partir d'une première face, dite face supérieure, du piston de détente en regard de ladite extrémité supérieure du corps de butée vers une deuxième face, dite face inférieure, du piston de détente en regard du piston de compression et en ce qu'il comprend également un clapet antiretour empêchant un fluide de traverser chacune de ces lumières depuis la face inférieure vers la face supérieure du piston de détente, la butée hydraulique comprenant un écrêteur de pression comprenant au moins un clapet déformable couplé à au moins une lumière du piston de détente, le clapet déformable étant adapté pour se déformer sous l'effet de la pression dans le corps de butée de façon à libérer ladite au moins une lumière.

En particulier, le piston de détente est adapté pour pouvoir être entraîné par la tige à partir de sa position étendue vers sa position comprimée lorsque le piston principal se déplace vers le corps de butée. En outre, le piston de compression est adapté pour pouvoir être entraîné par la tige à partir de sa position étendue vers sa position comprimée lorsque le piston principal se déplace en s'éloignant du corps de butée.

Une telle butée hydraulique fonctionne ainsi à double sens, c'est-à-dire aussi bien en compression, lorsque le piston principal se déplace en s'éloignant du corps de butée, qu'en détente, lorsque le piston principal se déplace vers le corps de butée.

Plus particulièrement, lorsque l'amortisseur fonctionne en compression, le piston principal s'éloigne du corps de butée. En fin de course, le piston de compression est déplacé par la tige vers sa position comprimée. Au cours de son déplacement, le piston de compression obture progressivement les moyens de communication. L'extrémité supérieure du corps de butée hydraulique étant fermée par le piston de détente, le fluide ne peut que s'échapper par les moyens de communication du corps de butée hydraulique. Ainsi, l'obturation progressive des moyens de communication réduisant le nombre de voies échappatoires de la butée hydraulique, l'effort d'amortissement est augmenté.

Inversement lorsque l'amortisseur fonctionne en détente, le piston principal se rapproche du corps de butée. En fin de course, le piston de détente est déplacé par la tige vers sa position comprimée. De la même manière que précédemment, au cours de son déplacement, le piston de détente obture progressivement les moyens de communication. L'extrémité inférieure du corps de butée hydraulique étant fermée par le piston de compression, le fluide ne peut que s'échapper par les moyens de communication du corps de butée hydraulique. L'obturation progressive des moyens de communication réduisant également le nombre de voies échappatoires de la butée hydraulique, l'effort de détente est augmenté.

Dans certains modes de réalisation et selon l'invention, le piston de détente présente au moins une lumière traversante adaptée pour laisser passer un fluide à partir d'une première face, dite face supérieure, du piston de détente en regard de ladite extrémité supérieure du corps de butée vers une deuxième face, dite face inférieure, du piston de détente en regard du piston de compression. En outre, le piston de détente comprend également un clapet antiretour empêchant un fluide de traverser chacune de ces lumières depuis la face inférieure vers la face supérieure du piston de détente.

Ces modes de réalisation permettent de faciliter la pénétration du fluide dans le corps de butée afin d'assurer un amortissement. En effet, bien que les moyens de communication de fluide permettent la pénétration du fluide dans le corps de butée, ils peuvent ne pas être suffisants. Les lumières ménagées dans le piston de détente permettent une réalimentation en fluide complète et rapide du corps de butée. Dès que la butée hydraulique est sollicitée en détente ou en compression, le clapet antiretour se referme et ne laisse plus passer le fluide. Ainsi, le clapet antiretour empêche le fluide de sortir de la chambre ménagée entre le piston de détente et le piston de compression.

Dans certains modes de réalisation et selon l'invention, au moins un orifice est ménagé dans le corps de butée entre la position étendue du piston de compression et l'extrémité inférieure du corps de butée, cet orifice n'étant jamais totalement obstrué par le piston de compression.

Chaque orifice ménagé dans le corps de butée entre la position étendue du piston de compression et l'extrémité inférieure du corps de butée permet d'alimenter en fluide l'espace entre le piston de compression et l'extrémité inférieure du corps de butée.

Dans certains modes de réalisation et selon l'invention, la butée hydraulique comprend un écrêteur de pression comprenant au moins un clapet déformable couplé à ladite au moins une lumière du piston de détente, le clapet déformable étant adapté pour se déformer sous l'effet de la pression dans le corps de butée de façon à libérer ladite au moins une lumière.

L'écrêteur de pression permet de limiter les efforts hydrauliques dans la butée hydraulique. L'écrêteur peut être adapté pour fonctionner aussi bien en compression qu'en détente.

Dans certains modes de réalisation avantageux et selon l'invention, le piston de compression et le piston de détente comprennent chacun un orifice traversant selon ledit axe principal et présentant des dimensions adaptées pour pouvoir être traversé par la tige de l'amortisseur et pour que le piston de compression et le piston de détente soient maintenus au contact de la tige de l'amortisseur lorsque cette tige de l'amortisseur les traverse.

Une telle butée hydraulique peut ainsi être installée dans des amortisseurs monotubes à piston diviseur concentrique.

Dans certains modes de réalisation et selon l'invention, la butée hydraulique comprend un ressort de compression entre le piston de compression et le piston de détente, le ressort de compression étant adapté pour ramener le piston de compression dans sa position étendue et le piston de détente dans sa position étendue.

Dans certains modes de réalisation et selon l'invention, lesdits moyens de communication de fluide sont formés par des trous ménagés au travers de la paroi du corps de butée.

Le nombre et les dimensions des trous sont adaptés à la loi d'amortissement souhaitée.

L'invention s'étend également à une cartouche pour amortisseur caractérisée en ce qu'elle comprend une butée hydraulique selon l'invention.

Avantageusement et selon l'invention, la cartouche comprend :
- un corps principal cylindrique dans lequel est placée la butée hydraulique, présentant une première extrémité longitudinale fermée, dite extrémité supérieure,
- une tige s'étendant depuis l'extérieur du corps principal jusque dans la cavité du corps principal en traversant une deuxième extrémité longitudinale, dite extrémité inférieure, du corps principal, la tige portant un piston principal.

Avantageusement et selon l'invention, la cartouche comprend un dispositif de guidage de la tige, le dispositif de guidage fermant de manière étanche l'extrémité inférieure du corps principal et présentant un orifice traversant selon ledit axe principal et étant adapté pour être traversé par la tige.

Dans certains modes de réalisation avantageux, les déplacements du piston de compression et du piston de détente de la butée hydraulique ne sont pas pilotés directement par la tige, mais par des organes intermédiaires déplacés par la tige.

Ainsi, dans certains modes de réalisation avantageux et selon l'invention, la cartouche comprend un premier dispositif de butée monté sur la tige entre le piston principal et la butée hydraulique, le dispositif de butée étant adapté pour venir en contact du piston de détente lorsque le piston principal coulisse vers l'extrémité inférieure du corps principal de façon à déplacer ce piston de détente vers sa position comprimée.

En outre, dans certains modes de réalisation avantageux et selon l'invention, la cartouche comprend un deuxième dispositif de butée monté sur la tige à l'extérieur et en contact du piston de compression de façon à pouvoir déplacer le piston de compression vers sa position comprimée lorsque le piston principal coulisse vers l'extrémité supérieure du corps principal.

Dans certains modes de réalisation avantageux et selon l'invention, le premier dispositif de butée comprend une collerette saillante adaptée pour s'étendre autour dudit au moins un clapet déformable de l'écrêteur de pression lorsque le premier dispositif de butée est en contact avec le piston de détente de façon à délimiter une enceinte avec le piston de détente autour dudit au moins un clapet déformable pour empêcher le fonctionnement de l'écrêteur.

Ainsi, un tel premier dispositif de butée permet d'empêcher le fonctionnement de l'écrêteur lorsque la butée hydraulique fonctionne en détente, c'est-à-dire lorsque le premier dispositif de butée est disposé contre le piston de détente et que le piston principal est entraîné vers l'extrémité inférieure du corps principal de la cartouche.

L'invention s'étend également à un amortisseur caractérisé en ce qu'il comprend une butée hydraulique selon l'invention.

Dans certains modes de réalisation avantageux et selon l'invention, l'amortisseur comprend une cartouche selon l'invention.

Dans certains modes de réalisation avantageux et selon l'invention, l'amortisseur comprend une jambe de force comprenant un corps cylindrique s'étendant autour de la cartouche, une partie de la tige de la cartouche s'étendant à l'extérieure du corps principal de la cartouche étant introduite et assemblée au corps cylindrique de la jambe de force.

L'invention concerne également une butée hydraulique, une cartouche et un amortisseur caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :
- la figure 1 représente une vue en perspective et une vue en coupe longitudinale d'un amortisseur selon un mode de réalisation de l'invention,
- la figure 2 représente une vue en perspective et une vue en coupe longitudinale d'une cartouche selon un mode de réalisation de l'invention,
- la figure 3 représente une vue en coupe longitudinale d'une butée hydraulique selon un mode de réalisation de l'invention intégrée dans la cartouche de la figure 2,
- la figure 4 représente une vue détaillée de la butée hydraulique lorsque la cartouche fonctionne en détente,
- la figure 5 représente une vue détaillée de la butée hydraulique lorsque la cartouche fonctionne en compression,

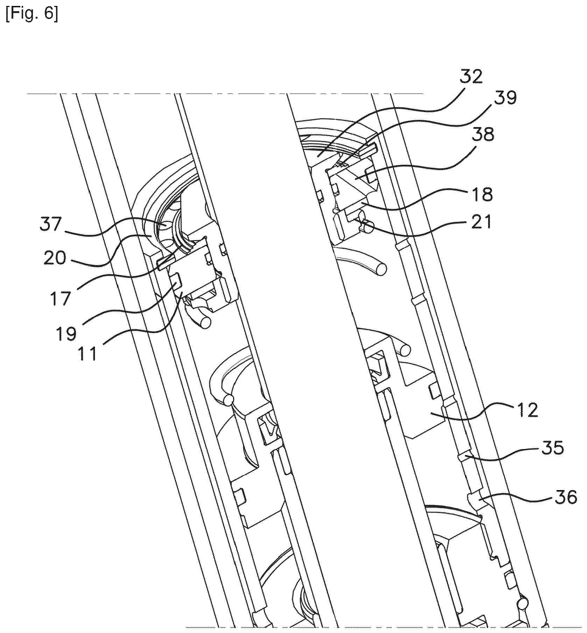

- la figure 6 est une vue détaillée du piston de détente de la butée hydraulique.

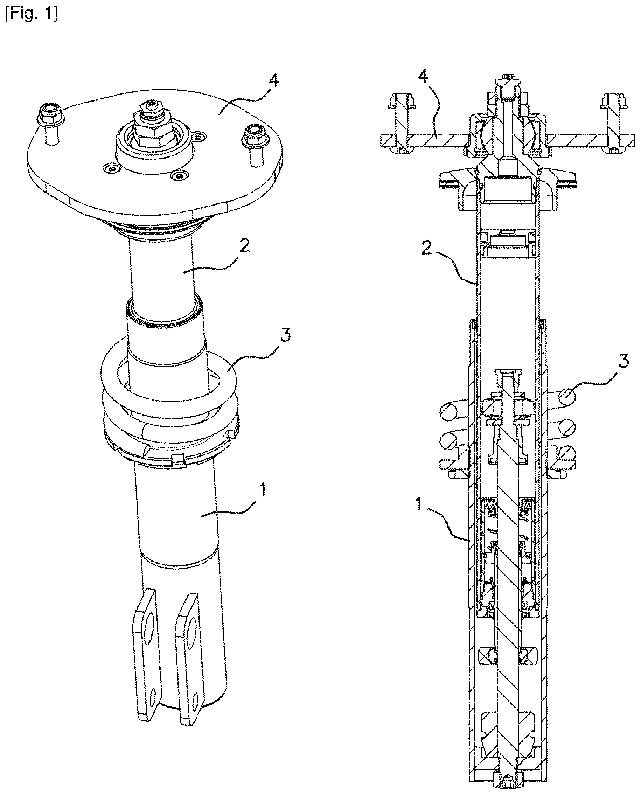

Un amortisseur selon un mode de réalisation de l'invention est représenté à la figure 1. L'amortisseur représenté est un type particulier comprenant une jambe de force et une cartouche inversée coulissant dans la jambe de force.

La jambe de force comprend un corps 1 cylindrique adapté pour être relié à un porte pivot qui supporte une roue d'un véhicule.

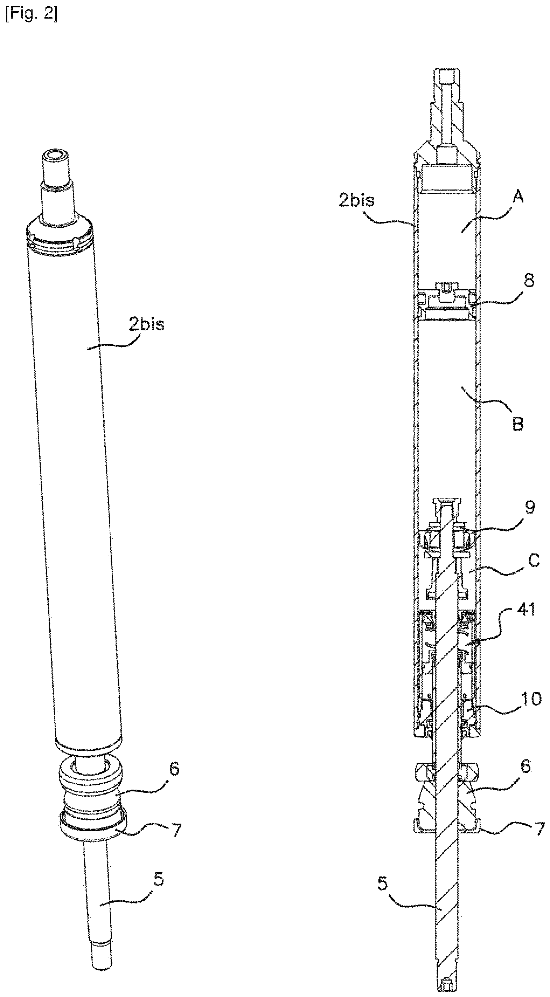

La cartouche 2 est adaptée pour être reliée à une caisse du véhicule par l'intermédiaire d'une coupelle supérieure 4. Comme représenté à la figure 2, la cartouche 2 comprend un corps 2bis principal cylindrique présentant une première extrémité longitudinale supérieure fermée. La cartouche 2 comprend également une coupelle 4 supérieure au niveau de l'extrémité longitudinale supérieure du corps 2bis principal. Le corps 2bis principal est de préférence en acier chromé. La cartouche 2 comprend en outre une tige 5 portant un piston 9 principal. La tige 5 de la cartouche 2 présente une extrémité fixée à une extrémité inférieure du corps 1 cylindrique de la jambe de force. La tige 5 et le piston 9 principal sont mobiles dans le corps 2bis selon un axe principal. Le piston 9 principal comprend des organes hydrauliques. Ces organes organes hydrauliques sont des clapets déformables qui sous l'action de la pression se déforment de façon à laisser passer le fluide au travers du piston 9 principal.

La cartouche présente également une deuxième extrémité longitudinale inférieure. Cette extrémité longitudinale inférieure est fermée de manière étanche par un dispositif 10 de guidage. Le dispositif 10 de guidage présente un orifice traversant adapté pour être traversé par la tige 2.

La cartouche comprend également un piston 8 diviseur disposé dans le corps 2bis principal entre la première extrémité longitudinale supérieure du corps 2bis principal. Le piston 8 diviseur délimite une chambre A de compensation comprenant un volume de gaz entre le piston 8 diviseur et la première extrémité longitudinale supérieure. Par exemple, le gaz utilisé est de l'azote. La pression hydraulique dans la chambre A de compensation varie entre 10 et 40 bars.

En outre, une chambre B de compression est définie entre le piston 8 diviseur et le piston 9 principal. Cette chambre de compression comprend un fluide. De préférence, le fluide utilisé est de l'huile.

Une chambre C de détente est formée entre le piston 9 principal et le dispositif 10 de guidage.

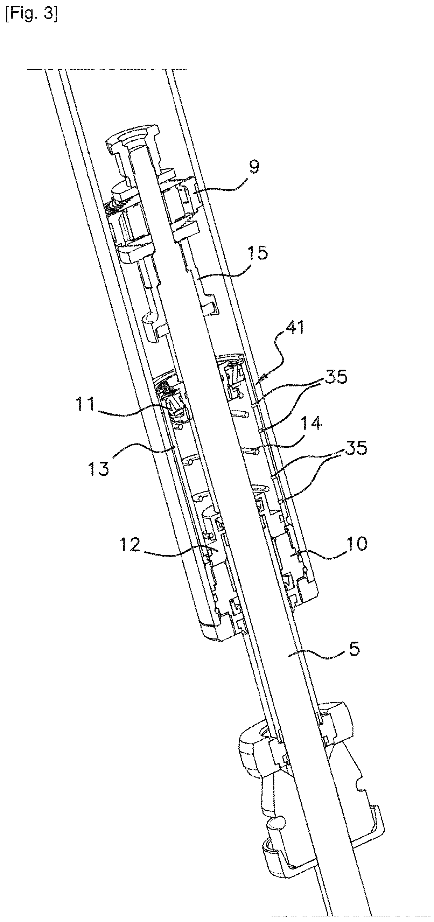

Par ailleurs, la cartouche comprend une butée 41 hydraulique, représentée notamment à la figure 3, montée dans le corps 2bis de la cartouche entre une deuxième extrémité longitudinale inférieure du corps 2bis et le piston 9 principal. Plus particulièrement, la butée 41 hydraulique est disposée dans la chambre C de détente. La butée 41 hydraulique comprend un corps 13 de butée formé d'une paroi cylindrique délimitant une cavité et présentant deux extrémités longitudinales. La cartouche comprend également deux pistons 11, 12 montés dans la cavité de façon à pouvoir coulisser dans cette dernière selon l'axe principal.

En particulier, un premier piston, dit piston 11 de détente, est adapté pour pouvoir être déplacé selon ledit axe principal par la tige 5 entre :
- une première position, dite position comprimée, entre les deux extrémités longitudinales du corps 13 de butée et
- une seconde position, dite position étendue, entre une première extrémité longitudinale du corps 13 de butée et la position comprimée du piston 11 de détente.

La position étendue du piston 11 de détente est définie à l'aide d'un circlip 20 servant de butée.

Le piston 11 de détente comprend en particulier un écrou 32 qui s'étend autour et contre la tige 5. Le piston 11 de détente comprend également une pièce annulaire s'étendant autour et contre l'écrou 32. La pièce annulaire présente une surface périphérique contre le corps 13 de butée.

En outre, un deuxième piston, dit piston 12 de compression, est adapté pour pouvoir être déplacé selon ledit axe principal par la tige 5 entre :
- une première position, dite position étendue, entre la position comprimée du piston 11 de détente et la deuxième extrémité longitudinale du corps 13 de butée et
- une seconde position, dite position comprimée, entre la position étendue du piston 12 de compression et la position comprimée du piston 11 de détente.

La position étendue du piston 12 de compression est définie à l'aide du dispositif 10 de guidage qui sert de butée.

Une chambre D de butée est définie entre le piston de détente et le piston de compression.

Des trous 35 sont ménagés dans la paroi du corps 13 de butée entre la position étendue du piston 11 de détente et la position étendue du piston 12 de compression. Ces trous 35 servent de moyens de communication de fluide entre la chambre D de butée et la chambre C de détente. Les trous 35 sont agencés sur différentes hauteurs du corps 13 de butée. Le nombre de trous 35 et leurs dimensions varient en fonction de la loi d'amortissement que l'on souhaite obtenir. Ainsi, par exemple, la butée 41 hydraulique peut comprend 3, 4, 10 ou 20 trous 35.

La butée 41 hydraulique comprend également un ressort 14 de compression entre le piston 12 de compression et le piston 11 de détente. Le ressort 14 de compression est adapté pour ramener le piston 12 de compression dans sa position étendue et le piston 11 de détente dans sa position étendue.

Un premier dispositif 15, 16 de butée est monté autour de la tige entre le piston 9 principal et le corps 13 de butée. Ce premier dispositif de butée comprend un champignon 15 et un élastomère 16. En particulier le champignon 15 repose sur un épaulement de la tige et est serré par le piston 9 principal, ou par un autre élément. L'élastomère 16 est logé dans une cavité ménagée sur une face inférieure du champignon 15. Le premier dispositif de butée est adapté pour pouvoir déplacer le piston 11 de détente. En particulier, lorsque le piston 9 principal en fin de course en détente, notamment sur les 15 à 30 derniers millimètres de course de détente, le premier dispositif de butée vient s'appuyer contre le piston 11 de détente de façon à exercer une force sur le piston 11 de détente. Cette force permet d'entraîner le piston 11 de détente vers sa position comprimée. En particulier, le champignon 15 et l'élastomère 16 traversent le circlip 20 et l'élastomère 16 prend appui sur le piston 11 de détente.

Un deuxième dispositif de butée est monté autour de la tige 5 à l'extérieur du corps 2b principal de la cartouche. Ce deuxième dispositif de butée comprend un bol 7 de saturation au niveau de l'extrémité de la tige fixée au corps 1 cylindrique de la jambe de force. Le deuxième dispositif de butée comprend également une butée 6 élastique qui est montée autour de la tige sur le bol 7 de saturation. De préférence, la butée 6 élastique est en polyuréthane. En outre, le deuxième dispositif de butée comprend un tube 33 et un champignon 23, 34 s'étendant autour de la tige 5.

En particulier, le champignon 23, 34 comprend deux pièces 23, 34 annulaires concentriques et est disposé à l'extérieur du corps 2b de la cartouche. La pièce 34 s'étend autour de la pièce 23 qui est au contact de la tige 5. En variante, rien n'empêche de prévoir un champignon 23, 34 composé d'une seule pièce. L'utilisation de deux pièces 23, 34 permet non seulement de réduire les coûts de fabrication du champignon mais aussi de l'alléger. En effet, la pièce 23 peut être métallique et la pièce 34 peut être en plastique.

Le tube 33 s'étend au travers de l'orifice du dispositif 10 de guidage et présente une première extrémité 29a longitudinale assemblée au piston 12 de compression et une deuxième extrémité 29b longitudinale assemblée à la pièce 23 du champignon du deuxième dispositif de butée. Ainsi, le champignon 23, 34 est relié au piston 12 de compression par l'intermédiaire du tube 33. Les extrémités 29a, 29b longitudinales comprennent chacune un segment de guidage pour guider la tige 5.

La pièce 23 du champignon est équipée d'un racleur 25.

Le piston 12 de compression est entraîné vers sa position comprimée par l'action de la butée 6 élastique venant en appui contre le champignon 23, 34 en fin de course, notamment sur les 20 à 50 derniers millimètres de course de compression. La butée 6 exerce ainsi une force sur le champignon 23, 34 qui est transmise au piston 12 de compression par l'intermédiaire du tube 33 de façon à entraîner le piston 12 de compression vers sa position comprimée. La butée 6 étant élastique permet de minimiser le bruit lorsqu'il y a contact avec le champignon 23, 34. En outre, la butée 6 peut également apporter un peu de raideur en fin de course, par exemple pour contribuer à un anti-roulis naturel.

Par ailleurs, le piston 11 de détente comprend des lumières 37 ménagées dans la pièce annulaire du piston 11 de détente entre une face supérieure de la pièce annulaire et une face inférieure de la pièce annulaire. Ces lumières 37 permettent le passage d'un fluide à partir de la chambre C de détente vers la chambre D de butée de façon à assurer une alimentation en fluide de la chambre D de butée. Le piston 11 de détente comprend également un clapet 18 antiretour disposé dans une gorge formée entre la face inférieure de la pièce annulaire du piston de détente et un limiteur 21 s'étendant en saillie de l'écrou 32 et vissé à ce dernier.

Le clapet 18 antiretour est adapté pour obturer les lumières 37 lorsque la pression hydraulique dans la chambre D de butée est importante. Le clapet 18 antiretour empêche ainsi au fluide compris dans la chambre D de butée de traverser les lumières 37.

Néanmoins, le piston 11 de détente comprend également un écrêteur permettant le passage du fluide présent dans la chambre D de butée vers la chambre C de détente au travers du piston 11 de détente lorsque la pression hydraulique dans la chambre D atteint un certain seuil à cause de la saturation des trous 35. L'écrêteur comprend un ensemble de clapets 39 déformables, qui libèrent des lumières 38 ménagées au travers la pièce annulaire du piston 11 de détente. Les clapets sont serrés entre la face supérieure du piston 11 de détente et l'écrou 32. Le serrage est ajusté en vissant l'écrou 32 dans le limiteur 21 du clapet anti-retour.

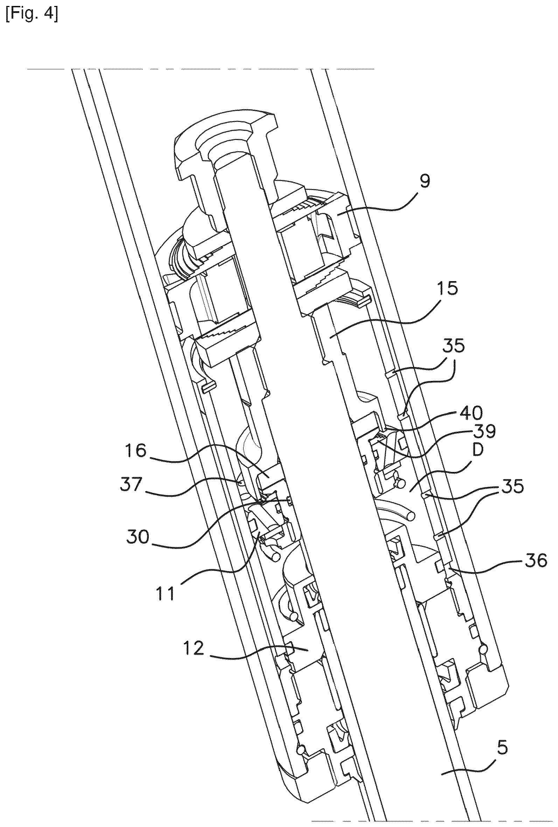

Le champignon 15 du premier dispositif de butée comprend une collerette 40 saillante selon l'axe principal. Cette collerette 40 est adaptée pour s'étendre autour des clapets 39 déformables de l'écrêteur 17 de pression lorsque le premier dispositif 15,16 de butée est en contact avec le piston 11 de détente. La collerette 40 délimite alors, avec le piston 11 de détente, une enceinte comprenant les clapets 39 déformables de l'écrêteur, comme représenté à la figure 4. Cette enceinte permet d'empêcher une communication de fluide entre l'écrêteur et la chambre C de détente lorsque le premier dispositif de butée est en contact avec le piston 11 de détente.

Ainsi, lorsque le premier dispositif de butée est en contact avec le piston 11 de détente, même si les clapets 39 déformables viennent à libérer les lumières 38 de l'écrêteur, l'enceinte formée par la collerette 40 et le piston de détente permet d'empêcher un passage d'un fluide traversant l'écrêteur vers la chambre C de détente. Le premier dispositif de butée empêche donc ainsi le fonctionnement de l'écrêteur lorsque le premier dispositif de butée est en contact avec le piston 11 de détente, notamment lorsque la cartouche fonctionne en détente. L'écrêteur fonctionne donc lorsque le premier dispositif 15,16 de butée n'est pas en contact du piston 11 de détente, notamment lorsque la cartouche fonctionne en compression.

Le corps 13 de butée comprend également un ensemble de trous latéraux 36 entre la position étendue du piston 12 de compression et la deuxième extrémité inférieure du corps 13 de butée. Ces trous 36 permettent l'alimentation de la chambre entre la position étendue du piston 12 de compression et la deuxième extrémité inférieure du corps de butée lors du déplacement du piston 12 de compression vers sa position comprimée.

Le piston 12 de compression comprend un coupe pression 24 afin d'étanchéifier le piston 12 de compression lorsque la pression dans la chambre D est trop importante.

Afin de maîtriser la pression hydraulique dans la chambre D de butée en évitant des fuites de fluide parasite, des joints 30, 31 et des segments 19 étanches sont utilisés. En particulier, le joint 30 dynamique est disposé entre l'écrou 32 et la tige 5. Le joint 31 statique est disposé entre l'écrou 32 et la pièce annulaire du piston 11 de détente. Les segments étanches 19 sont disposés autour du piston 11 de détente et du piston 12 de compression de façon à être en contact de la paroi du corps 13 de butée.

Le dispositif 10 de guidage intègre un coupe pression 26 et un racleur 27 afin d'assurer une étanchéité entre le piston 12 de compression et le dispositif 10 de guidage.

Par ailleurs, l'amortisseur comprend un ressort 3 (représenté partiellement à la figure 1) qui est monté autour de la cartouche 2 et qui prend appui sur la coupelle supérieure 4 et un collet du corps 1 cylindrique de la jambe de force.

Le fonctionnement de l'amortisseur est décrit ci-dessous.

Lorsque le corps 1 cylindrique de la jambe de force remonte vers la caisse, alors la tige 5 et le piston 9 se déplacent vers la première extrémité supérieure de la cartouche 2, provoquant ainsi un déplacement de fluide. Les organes hydrauliques spécifiques, montés sur le piston principal 9 engendrent une perte de charge génératrice d'un effort d'amortissement. Cet amortissement est l'amortissement principal.

Le volume de la tige 5 entrant dans la cartouche 2 provoque le déplacement du piston diviseur 8 qui vient comprimer le volume de gaz dans la chambre A. Ainsi à la compression, le volume de fluide qui se trouve dans la chambre B de compression passe à la fois sous le piston 9 principal en générant un effort d'amortissement pour aller vers la chambre C de détente, mais aussi vers la chambre A de compensation. Inversement à la détente, le volume de fluide de la chambre C de détente retourne vers la chambre B de compression en passant par le piston 9 principal en générant un effort d'amortissement. Le volume comprimé dans la chambre A de compensation se détend alors.

Le fonctionnement en détente de la butée 41 hydraulique est illustré à la figure 4. Lors de la détente, le piston 9 principal et le champignon 15 du premier dispositif de butée se déplacent vers l'extrémité longitudinale inférieure du corps 2b principal de la cartouche 2 jusqu'à ce que le champignon 15 vienne en appui sur le piston 11 de détente. En particulier, le champignon 15 appuie sur le piston 11 de détente par l'intermédiaire de l'élastomère 16 afin de minimiser le bruit à l'impact. Le piston 11 de détente est ensuite entraîné par le champignon 15 vers sa position comprimée. En se déplaçant vers l'extrémité longitudinale inférieure du corps 2bis principal, le piston 11 de détente provoque une diminution du volume de la chambre D de butée. Le fluide contenu dans la chambre D de butée ne peut alors s'échapper que par les trous 35 ménagés dans le corps de butée 13. Le nombre et la position de ces trous permettent de réaliser des lois d'amortissement sur mesure pour la butée 41 hydraulique. Ainsi lorsque le piston 11 de détente progresse dans le corps 13, il obture progressivement les trous 35. Ainsi, le piston 11 de détente diminue les voies échappatoires pour le fluide. Il devient alors de plus en plus dur de faire passer le fluide de la chambre de butée D vers la chambre de détente C. La butée 41 hydraulique génère ainsi un effort d'amortissement qui est à la fois proportionnel à la vitesse, mais aussi à la position d'enfoncement du piston principal 9.

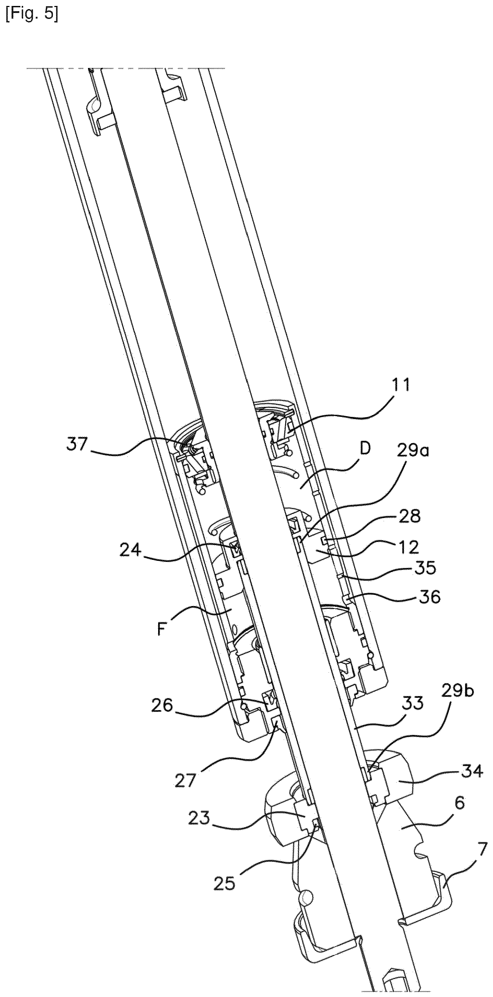

Le fonctionnement en compression de la butée 41 hydraulique est illustré à la figure 5. Dans ce cas le piston 11 de détente est agencé dans position étendue. Le piston 11 de détente est alors plaqué contre le circlip 20. Lors d'un fonctionnement en compression, le piston 9 principal et la tige 5 sont entraînés vers l'extrémité longitudinale supérieure de la cartouche. En particulier, la tige 5 est entraînée par l'extrémité longitudinale inférieure du corps 1 cylindrique de la jambe de force. La tige 5 entraîne alors le bol 7 de saturation du deuxième dispositif de butée vers l'extrémité longitudinale inférieure du corps 2b principal de la cartouche. Ce déplacement du bol 7 de saturation permet de plaquer la butée 6 polyuréthane contre le champignon 23, 34. Comme le champignon 23, 34 est relié au piston 13 de compression par l'intermédiaire du tube 33 concentrique autour de la tige 5, le déplacement du champignon 23, 34 vers l'extrémité longitudinale inférieure du corps 2b principal de la cartouche entraîne également le déplacement du piston 12 de compression vers sa position comprimée. Le déplacement du piston 12 de compression permet d'obturer progressivement les trous 35 du corps de butée 13. Comme vu précédemment, le fait d'obturer progressivement les trous 35 permet de générer un effort d'amortissement. Lorsque le piston 12 se déplace lors du fonctionnement en compression, il libère entre lui et le dispositif 10 de guidage une chambre F qui est réalimentée par les trous latéraux 36. Cette chambre F est réalimentée librement et son remplissage / vidange ne génère pas de perte de charge.

La raideur apportée par la butée 6 polyuréthane de compression, permet également de faire croitre progressivement l'effort afin de lisser l'effort généré par l'entrée soudaine du tube 33 dans l'amortisseur.

Lorsque la pression dans la chambre D de butée est supérieure à un seuil, les clapets de l'écrêteur s'ouvrent en se déformant. Cette ouverture engendre une décharge de la pression dans la chambre de butée D et donc une limitation de l'effort généré par la butée.

L'invention peut faire l'objet de nombreuses variantes et applications autres que celles décrites ci-dessus. Par exemple, bien que la description soit faite en relation avec un type particulier de suspension qui est celui de la jambe de force à cartouche inverse, la butée hydraulique peut être intégrée à n'importe quelle autre architecture de suspension ou à n'importe quelle technologie d'amortisseur. En particulier, lorsque la butée hydraulique est utilisée dans un amortisseur monotube, cet amortisseur peut également être monté soit entre articulations sur des bras tirés, des ponts rigides, des multi bras, des essieux déformables. La butée hydraulique peut également être installée dans des amortisseurs bitubes ou des amortisseurs à réservoir séparé. L'étendue de la protection est définie par les revendications annexées.

En outre, les trous 35 servant de moyens de communication de fluide peuvent être remplacés par des rainures axiales.

Les véhicules pouvant comprendre de tels amortisseurs peuvent être des voitures, des motos / scooters, des quads, des camions / véhicules militaires ou aéronautiques.

## Revendications

1. Butée hydraulique pour le freinage en fin de course d'un piston principal (9) monté sur une tige (5) mobile selon un axe principal, la butée hydraulique comprenant :
- un corps, dit corps (13) de butée, formé d'une paroi cylindrique qui délimite une cavité et présente deux extrémités longitudinales,
- deux pistons (11, 12) montés dans ladite cavité de façon à pouvoir coulisser dans cette dernière selon l'axe principal, les deux pistons (11, 12) sont adaptés à être déplacés selon l'axe principal par la tige (5) dans le corps de butée (13),
un premier piston, dit piston (11) de détente, étant adapté pour être déplacé entre :
∘une première position, dite position comprimée, entre les deux extrémités longitudinales du corps (13) de butée, et
∘ une seconde position, dite position étendue, entre une première extrémité longitudinale, dite extrémité supérieure, du corps (13) de butée et la position comprimée du piston (11) de détente,
un deuxième piston, dit piston (12) de compression, qui est adapté pour être déplacé entre :
∘ une première position, dite position étendue, entre la position comprimée du piston (11) de détente et une deuxième extrémité longitudinale, dite extrémité inférieure, du corps (13) de butée et
∘ une seconde position, dite position comprimée, entre la position étendue du piston (12) de compression et la position comprimée du piston (11) de détente,
ledit corps (13) de butée comprenant des moyens (35) de communication de fluide entre, d'une part, un espace défini entre la position étendue du piston(11) de détente et la position étendue du piston (12) de compression, et d'autre part, l'extérieur du corps (13) de butée,
**caractérisé en ce que** le piston (11) de détente présente au moins une lumière (37) traversante adaptée pour laisser passer un fluide à partir d'une première face, dite face supérieure, du piston (11) de détente en regard de ladite extrémité supérieure du corps (13) de butée vers une deuxième face, dite face inférieure, du piston (11) de détente en regard du piston (12) de compression et **en ce qu'**il comprend également un clapet antiretour (18) empêchant un fluide de traverser chacune de ces lumières (37) depuis la face inférieure vers la face supérieure du piston de détente, la butée hydraulique comprenant un écrêteur (17) de pression comprenant au moins un clapet (39) déformable couplé à au moins une lumière (38) du piston (11) de détente, le clapet (39) déformable étant adapté pour se déformer sous l'effet de la pression dans le corps (13) de butée de façon à libérer ladite au moins une lumière (38).

2. Butée hydraulique selon la revendication 1, **caractérisée en ce que** le piston (12) de compression et le piston (11) de détente comprennent chacun un orifice traversant selon ledit axe principal et présentant des dimensions adaptées pour pouvoir être traversé par la tige (5) de l'amortisseur et pour que le piston (12) de compression et le piston (11) de détente soient maintenus au contact de la tige (5) de l'amortisseur lorsque cette tige (5) de l'amortisseur les traverse.

3. Butée hydraulique selon l'une des revendications 1 et 2, **caractérisée en ce qu'**au moins un orifice (36) est ménagé dans le corps (13) de butée entre la position étendue du piston (12) de compression et l'extrémité inférieure du corps (13) de butée, cet orifice (36) n'étant jamais totalement obstrué par le piston (12) de compression.

4. Butée hydraulique selon l'une des revendications 1 à 3, **caractérisée en ce que** lesdits moyens (35) de communication de fluide sont formés par des trous ménagés au travers de la paroi du corps (13) de butée.

5. Butée hydraulique selon l'une des revendications 1 à 4, **caractérisée en ce qu'**elle comprend un ressort (14) de compression entre le piston (12) de compression et le piston (11) de détente, le ressort de compression étant adapté pour ramener le piston (12) de compression dans sa position étendue et le piston (11) de détente dans sa position étendue.

6. Cartouche pour amortisseur monotube **caractérisée en ce qu'**elle comprend une butée hydraulique selon l'une des revendications 1 à 5.

7. Cartouche selon la revendication 6, **caractérisée en ce qu'**elle comprend :
- un corps (2bis) principal cylindrique dans lequel est placée la butée hydraulique, présentant une première extrémité longitudinale fermée, dite extrémité supérieure,
- une tige (5) s'étendant depuis l'extérieur du corps principal jusque dans la cavité du corps (2bis) principal en traversant une deuxième extrémité longitudinale, dite extrémité inférieure, du corps principal, la tige (5) portant un piston principal (9).

8. Cartouche selon la revendication 7, **caractérisée en ce qu'**elle comprend un dispositif (10) de guidage de la tige (5), le dispositif (10) de guidage fermant de manière étanche l'extrémité inférieure du corps (2bis) principal et présentant un orifice traversant selon ledit axe principal et étant adapté pour être traversé par la tige (5).

9. Cartouche selon l'une des revendications 7 à 8, **caractérisée en ce qu'**elle comprend un premier dispositif (15, 16) de butée monté sur la tige (5) entre le piston (9) principal et la butée hydraulique, le dispositif de butée étant adapté pour venir en contact du piston (11) de détente lorsque le piston (9) principal coulisse vers l'extrémité inférieure du corps principal de façon à déplacer ce piston (11) de détente vers sa position comprimée.

10. Cartouche selon la revendication 9, **caractérisée en ce qu'**elle comprend un deuxième dispositif (6, 7) de butée monté sur la tige (5) à l'extérieur et en contact du piston (12) de compression de façon à pouvoir déplacer le piston (12) de compression vers sa position comprimée lorsque le piston (9) principal coulisse vers l'extrémité supérieure du corps (2bis) principal.

11. Cartouche selon l'une quelconque des revendications 9 ou 10 **caractérisée en ce que** le premier dispositif (15, 16) de butée comprend une collerette (40) saillante adaptée pour s'étendre autour dudit au moins un clapet (39) déformable de l'écrêteur (17) de pression lorsque le premier dispositif (15,16) de butée est en contact avec le piston (11) de détente de façon à délimiter une enceinte avec le piston (11) de détente autour dudit au moins un clapet (39) déformable pour empêcher le fonctionnement de l'écrêteur.

12. Amortisseur **caractérisé en ce qu'**il comprend une butée hydraulique selon l'une des revendications 1 à 5.

13. Amortisseur selon la revendication 12, **caractérisé en ce qu'**il comprend une cartouche selon l'une des revendications 6 à 11.

14. Amortisseur selon la revendication 13, **caractérisé en ce qu'**il comprend une jambe de force comprenant un corps (1) cylindrique s'étendant autour de la cartouche, une partie de la tige (5) de la cartouche s'étendant à l'extérieure du corps (2bis) principal de la cartouche étant introduite et assemblée au corps (1) cylindrique de la jambe de force.

## Patentansprüche

1. Hydraulischer Endanschlag zum Abbremsen, am Ende des Hubwegs, eines Hauptkolbens (9), der an einer entlang einer Hauptachse beweglichen Stange (5) montiert ist, wobei der hydraulische Endanschlag Folgendes beinhaltet:
- einen Körper, als Endanschlagkörper (13) bezeichnet, der aus einer zylindrischen Wand gebildet ist, die einen Hohlraum begrenzt und zwei Längsenden aufweist,
- zwei Kolben (11, 12), die in dem Hohlraum montiert sind, um entlang der Hauptachse in diesem letzteren gleiten zu können, wobei die zwei Kolben (11, 12) dazu angepasst sind, durch die Stange (5) in dem Endanschlagkörper (13) entlang der Hauptachse bewegt zu werden,
wobei ein erster Kolben, als Entspannungskolben (11) bezeichnet, dazu angepasst ist, zwischen Folgendem bewegt zu werden:
o einer ersten Stellung, als komprimierte Stellung bezeichnet, zwischen den zwei Längsenden des Endanschlagkörpers (13) und
o einer zweiten Stellung, als entspannte Stellung bezeichnet, zwischen einem ersten Längsende, als oberes Ende bezeichnet, des Endanschlagkörpers (13) und der komprimierten Stellung des Entspannungskolbens (11),
einen zweiten Kolben, als Kompressionskolben (12) bezeichnet, der dazu angepasst ist, zwischen Folgendem bewegt zu werden:
o einer ersten Stellung, als entspannte Stellung bezeichnet, zwischen der komprimierten Stellung des Entspannungskolbens (11) und einem zweiten Längsende, als unteres Ende bezeichnet, des Endanschlagkörpers (13) und
o einer zweiten Stellung, als komprimierte Stellung bezeichnet, zwischen der entspannten Stellung des Kompressionskolbens (12) und der komprimierten Stellung des Entspannungskolbens (11),
wobei der Endanschlagkörper (13) Mittel (35) zur Kommunikation von Fluid zwischen einerseits einem Raum, der zwischen der entspannten Stellung des Entspannungskolbens (11) und der entspannten Stellung des Kompressionskolbens (12) definiert ist, und andererseits der Außenseite des Endanschlagkörpers (13) beinhaltet,
**dadurch gekennzeichnet, dass** der Entspannungskolben (11) mindestens eine Durchgangsbohrung (37) aufweist, die dazu angepasst ist, ein Fluid von einer ersten Seite, als obere Seite bezeichnet, des Entspannungskolbens (11) gegenüber dem oberen Ende des Endanschlagkörpers (13) zu einer zweiten Seite, als untere Seite bezeichnet, des Entspannungskolbens (11) gegenüber dem Kompressionskolben (12) durchzulassen, und dass er ferner ein Rückschlagventil (18) beinhaltet, das verhindert, dass ein Fluid jede dieser Durchgangsbohrungen (37) von der unteren Seite zu der oberen Seite des Entspannungskolbens durchquert, wobei der hydraulische Endanschlag einen Druckbegrenzer (17) beinhaltet, der mindestens eine verformbare Klappe (39) beinhaltet, die mit mindestens einer Bohrung (38) des Entspannungskolbens (11) gekoppelt ist, wobei die verformbare Klappe (39) dazu angepasst ist, sich unter der Wirkung des Drucks in dem Endanschlagkörper (13) zu verformen, um die mindestens eine Bohrung (38) freizugeben.

2. Hydraulischer Endanschlag nach Anspruch 1, **dadurch gekennzeichnet, dass** der Kompressionskolben (12) und der Entspannungskolben (11) jeweils eine Durchgangsöffnung entlang der Hauptachse beinhalten, die Maße aufweist, die dazu angepasst sind, von der Stange (5) des Dämpfers durchquert werden zu können und den Kompressionskolben (12) und den Entspannungskolben (11) in Kontakt mit der Stange (5) des Dämpfers zu halten, wenn diese Stange (5) des Dämpfers sie durchquert.

3. Hydraulischer Endanschlag nach einem der Ansprüche 1 und 2, **dadurch gekennzeichnet, dass** in dem Endanschlagkörper (13) zwischen der entspannten Stellung des Kompressionskolbens (12) und dem unteren Ende des Endanschlagkörpers (13) mindestens eine Öffnung (36) eingerichtet ist, wobei diese Öffnung (36) von dem Kompressionskolben (12) niemals vollständig versperrt wird.

4. Hydraulischer Endanschlag nach einem der Ansprüche 1 bis 3, **dadurch gekennzeichnet, dass** die Mittel (35) zur Kommunikation von Fluid durch Löcher gebildet sind, die durch die Wand des Endanschlagkörpers (13) hindurch eingerichtet sind.

5. Hydraulischer Endanschlag nach einem der Ansprüche 1 bis 4, **dadurch gekennzeichnet, dass** er zwischen dem Kompressionskolben (12) und dem Entspannungskolben (11) eine Kompressionsfeder (14) beinhaltet, wobei die Kompressionsfeder dazu angepasst ist, den Kompressionskolben (12) in seine entspannte Stellung und den Entspannungskolben (11) in seine entspannte Stellung zurückzubringen.

6. Patrone für einen Einrohrdämpfer, **dadurch gekennzeichnet, dass** sie einen hydraulischen Endanschlag nach einem der Ansprüche 1 bis 5 beinhaltet.

7. Patrone nach Anspruch 6, **dadurch gekennzeichnet, dass** sie Folgendes beinhaltet:
- einen zylindrischen Hauptkörper (2b), in dem der hydraulische Endanschlag platziert ist und der ein erstes geschlossenes Längsende, als oberes Ende bezeichnet, aufweist,
- eine Stange (5), die sich von der Außenseite des Hauptkörpers bis in den Hohlraum des Hauptkörpers (2b) erstreckt und dabei ein zweites Längsende, als unteres Ende bezeichnet, des Hauptkörpers durchquert, wobei die Stange (5) einen Hauptkolben (9) trägt.

8. Patrone nach Anspruch 7, **dadurch gekennzeichnet, dass** sie eine Vorrichtung (10) zur Führung der Stange (5) beinhaltet, wobei die Führungsvorrichtung (10) das untere Ende des Hauptkörpers (2b) dicht verschließt und eine Durchgangsöffnung entlang der Hauptachse aufweist und dazu angepasst ist, von der Stange (5) durchquert zu werden.

9. Patrone nach einem der Ansprüche 7 bis 8, **dadurch gekennzeichnet, dass** sie eine erste Endanschlagvorrichtung (15, 16) beinhaltet, die zwischen dem Hauptkolben (9) und dem hydraulischen Endanschlag an der Stange (5) montiert ist, wobei die Endanschlagvorrichtung dazu angepasst ist, mit dem Entspannungskolben (11) in Kontakt zu kommen, wenn der Hauptkolben (9) zu dem unteren Ende des Hauptkörpers gleitet, um diesen Entspannungskolben (11) in seine komprimierte Stellung zu bewegen.

10. Patrone nach Anspruch 9, **dadurch gekennzeichnet, dass** sie eine zweite Endanschlagvorrichtung (6, 7) beinhaltet, die auf der Außenseite an der Stange (5) und in Kontakt mit dem Kompressionskolben (12) montiert ist, um den Kompressionskolben (12) in seine komprimierte Stellung bewegen zu können, wenn der Hauptkolben (9) zu dem oberen Ende des Hauptkörpers (2b) gleitet.

11. Patrone nach einem der Ansprüche 9 oder 10, **dadurch gekennzeichnet, dass** die erste Endanschlagvorrichtung (15, 16) einen vorspringenden Kragen (40) beinhaltet, der dazu angepasst ist, sich um die mindestens eine verformbare Klappe (39) des Druckbegrenzers (17) zu erstrecken, wenn die erste Endanschlagvorrichtung (15, 16) mit dem Entspannungskolben (11) in Kontakt ist, um mit dem Entspannungskolben (11) eine Kammer um die mindestens eine verformbare Klappe (39) herum zu bilden, um die Funktion des Begrenzers zu verhindern.

12. Dämpfer, **dadurch gekennzeichnet, dass** er einen hydraulischen Endanschlag nach einem der Ansprüche 1 bis 5 beinhaltet.

13. Dämpfer nach Anspruch 12, **dadurch gekennzeichnet, dass** er eine Patrone nach einem der Ansprüche 6 bis 11 beinhaltet.

14. Dämpfer nach Anspruch 13, **dadurch gekennzeichnet, dass** er ein Federbein beinhaltet, das einen zylindrischen Körper (1) beinhaltet, der sich um die Patrone erstreckt, wobei ein Teil der Stange (5) der Patrone, der sich außerhalb des Hauptkörpers (2b) der Patrone erstreckt, in den zylindrischen Körper (1) des Federbeins eingeführt und daran angebracht wird.

## Claims

1. Hydraulic stop for the end of travel braking of a main piston (9) mounted on a rod (5) movable along a main axis, the hydraulic stop comprising:
- a body, referred to as a stop body (13), formed by a cylindrical wall which delimits a cavity and has two longitudinal ends,
- two pistons (11, 12) mounted in said cavity so as to be able to slide in the latter along the main axis, the two pistons (11, 12) being designed to be moved along the main axis by the rod (5) in the stop body (13),
a first piston, referred to as an expansion piston (11), being designed to be moved between:
o a first position, referred to as a compressed position, between the two longitudinal ends of the stop body (13), and
∘ a second position, referred to as an extended position, between a first longitudinal end, referred to as an upper end, of the stop body (13) and the compressed position of the expansion piston (11),
a second piston, referred to as a compression piston (12), which is designed to be moved between:
o a first position, referred to as an extended position, between the compressed position of the expansion piston (11) and a second longitudinal end, referred to as a lower end, of the stop body (13), and
∘ a second position, referred to as a compressed position, between the extended position of the compression piston (12) and the compressed position of the expansion piston (11),
said stop body (13) comprising means (35) for fluid communication between, on the one hand, a space defined between the extended position of the expansion piston (11) and the extended position of the compression piston (12), and, on the other hand, the outside of the stop body (13),
**characterized in that** the expansion piston (11) has at least one through-aperture (37) designed to allow a fluid to pass from a first face, referred to as an upper face, of the expansion piston (11) facing said upper end of the stop body (13) towards a second face, referred to as a lower face, of the expansion piston (11) facing the compression piston (12), and **in that** it also comprises a non-return valve (18) preventing a fluid from traversing each of these apertures (37) from the lower face towards the upper face of the expansion piston, the hydraulic stop comprising a pressure limiter (17) comprising at least one deformable valve (39) coupled to at least one aperture (38) of the expansion piston (11), the deformable valve (39) being designed to deform under the effect of the pressure in the stop body (13) so as to release said at least one aperture (38).

2. Hydraulic stop according to Claim 1, **characterized in that** the compression piston (12) and the expansion piston (11) each comprise a through-orifice along said main axis having dimensions designed to be able to be traversed by the rod (5) of the damper and so that the compression piston (12) and the expansion piston (11) are held in contact with the rod (5) of the damper when this rod (5) of the damper traverses them.

3. Hydraulic stop according to either of Claims 1 and 2, **characterized in that** at least one orifice (36) is provided in the stop body (13) between the extended position of the compression piston (12) and the lower end of the stop body (13), this orifice (36) never being completely obstructed by the compression piston (12).

4. Hydraulic stop according to one of Claims 1 to 3, **characterized in that** said fluid communication means (35) are formed by holes formed through the wall of the stop body (13).

5. Hydraulic stop according to one of Claims 1 to 4, **characterized in that** it comprises a compression spring (14) between the compression piston (12) and the expansion piston (11), the compression spring being designed to return the compression piston (12) to its extended position and the expansion piston (11) to its extended position.

6. Cartridge for a monotube damper, **characterized in that** it comprises a hydraulic stop according to one of Claims 1 to 5.

7. Cartridge according to Claim 6, **characterized in that** it comprises:
- a cylindrical main body (2bis) in which the hydraulic stop is placed, having a first closed longitudinal end, referred to as an upper end,
- a rod (5) extending from the outside of the main body into the cavity of the main body (2bis) while traversing a second longitudinal end, referred to as a lower end, of the main body, the rod (5) carrying a main piston (9).

8. Cartridge according to Claim 7, **characterized in that** it comprises a guide device (10) for guiding the rod (5), the guide device (10) sealingly closing the lower end of the main body (2bis) and having a through-orifice along said main axis being designed to be traversed by the rod (5).

9. Cartridge according to either of Claims 7 and 8, **characterized in that** it comprises a first stop device (15, 16) mounted on the rod (5) between the main piston (9) and the hydraulic stop, the stop device being designed to come into contact with the expansion piston (11) when the main piston (9) slides towards the lower end of the main body so as to move this expansion piston (11) to its compressed position.

10. Cartridge according to Claim 9, **characterized in that** it comprises a second stop device (6, 7) mounted on the rod (5) on the outside and in contact with the compression piston (12) so as to be able to move the compression piston (12) to its compressed position when the main piston (9) slides towards the upper end of the main body (2bis).

11. Cartridge according to either one of Claims 9 and 10, **characterized in that** the first stop device (15, 16) comprises a projecting collar (40) designed to extend around said at least one deformable valve (39) of the pressure limiter (17) when the first stop device (15, 16) is in contact with the expansion piston (11) so as to delimit an enclosure with the expansion piston (11) around said at least one deformable valve (39) to prevent the operation of the limiter.

12. Damper, **characterized in that** it comprises a hydraulic stop according to one of Claims 1 to 5.

13. Damper according to Claim 12, **characterized in that** it comprises a cartridge according to one of Claims 6 to 11.

14. Damper according to Claim 13, **characterized in that** it comprises a strut comprising a cylindrical body (1) extending around the cartridge, a portion of the rod (5) of the cartridge extending to the outside of the main body (2bis) of the cartridge being inserted and joined to the cylindrical body (1) of the strut.
